# EUROPÄISCHE PATENTANMELDUNG

(11) **EP 1 174 971 A2**
(43) Veröffentlichungstag der Anmeldung: **23.01.2002**
(21) Anmeldenummer: 01108680.8
(22) Anmeldetag: 06.04.2001
(51) Int. Cl.: H02G 3/04

(54) **Installationskanal**

(30) Priorität: 23.06.2000 DE 20004923 U
(71) Anmelder: REHAU AG + Co, 95111 Rehau (DE)
(72) Erfinder: Schinzel, Hartmut, 95111 Rehau (DE); Heinl, Thomas, 95111 Rehau (DE); Peetz, Matthias, 95111 Rehau (DE)

(57) **Zusammenfassung**

Die Erfindung betrifft einen Installationskanal, insbesondere Wandkanal mit einem zur einen Seite offenen Kanalprofil zur Aufnahme von elektrischen Installationseinrichtungen, Kabeln, Fluidleitungen und dergleichen und/oder einen Deckel.

Dieser Installationskanal ist wirtschaftlich und kostengünstig herstellbar, ohne zusätzliche Messmittel auf die geforderte Abmessung abgelängt und ohne weitere Hilfsmittel lotgerecht befestigbar ist.

Dies wird dadurch erreicht, dass auf wenigstens einer Seite des Kanalprofils und/oder wenigstens einer Seite des Deckels längsverlaufend eine Skalierung und/oder eine Höhenrissmarkierung aufgebracht ist.

## Beschreibung

Die Erfindung betrifft einen Installationskanal, insbesondere Wandkanal mit einem zu einer Seite offenen Kanalprofil zur Aufnahme von elektrischen Installationseinrichtungen, Kabeln, Fluid-Leitungen und dergleichen und/oder einem Deckel.

Derartige Installationskanäle sind aus dem Stand der Technik hinreichend bekannt.
So wird in der DE 297 03 480 U1 ein Installationskanal beschrieben, der aus polymerem Werkstoff hergestellt und als Klappkanal ausgeführt ist. Dieser Klappkanal soll bei einfachem Aufbau erhöhte mechanische Stabilität im Gebrauchszustand aufweisen.

Ein weiterer Installationskanal wird in der DE 197 09 195 A1 beschrieben.
Hier wird vorgeschlagen, den Installationskanal so auszubilden, daß das Kanalprofil aus mindestens zwei Teilprofilen aufgebaut ist, von denen jedes eine Seitenwand sowie je ein Teilstück der Rückwand und der Vorderwand aufweist. Dadurch soll es möglich sein, lediglich wenige Standardteilprofile herzustellen und auf Lager zu halten und dann, je nach Bedarf, aus diesen Teilprofilen die gewünschte Kanalform zusammenzusetzen.

Ein weiterer Installationskanal ist aus der DE 195 24 381 A1 bekannt.
Er ist aus einem einstückigen, in der Art eines C-profilierten Blechprofil hergestellt und soll ein vereinfachtes Einsetzen und elektrisch leitendes Kontaktieren einer Trennwand ermöglichen.

Allen diesen Installationskanälen aus dem Stand der Technik ist gemeinsam, daß bei deren Montage ein zusätzlicher Arbeitsgang zum Vermessen von abzulängenden Teilen erforderlich ist.

Hier muß durch den damit beschäftigten Installateur mit einem Meßmittel wie beispielsweise einem Zollstock die abzulängende Dimension auf dem Kanal gekennzeichnet, das Meßmittel weggelegt und dann mit dem Trennvorgang begonnen werden.

Ein weiterer Nachteil der Installationskanäle besteht darin, daß dieser bei einer Montage an beispielsweise senkrechte Wände nur dann lotgerecht bzw. waagerecht ausgeführt werden kann, wenn ein zusätzliches Meßmittel wie beispielsweise eine Wasserwaage verwendet wird. Dies gestaltet sich insbesondere bei großdimensionierten Installationskanälen, welche aus Metall bestehen, wie Sie in der DE 195 24 381 A1 beschrieben sind, sehr zeit- und vor allem kraftaufwendig für den Installateur.
Ein weiterer Nachteil derartiger Installationskanäle wird darin gesehen, daß bei einer bereits an der Wand gekennzeichneten Höhenlinie diese nicht mit dem zu befestigenden Installationskanal in Zusammenhang gebracht werden kann.

Hier setzt die Erfindung ein, die es sich zur Aufgabe gestellt hat, die Nachteile des bekannten Stand der Technik dahingehend zu vermeiden und einen Installationskanal aufzuzeigen, der wirtschaftlich und kostengünstig herstellbar ist und der ohne zusätzliche Meßmittel auf die geforderte Abmessung abgelängt werden kann und der ohne weitere Hilfsmittel lotgerecht befestigbar ist.

Dies wird dadurch gelöst, daß auf wenigstens einer Seite des Kanalprofiles und/oder des Deckels längsverlaufend wenigstens eine Skalierung und/oder wenigstens eine Hohenrißmarkierung aufgebracht ist.

Durch diese Ausgestaltung ist es möglich, derartige erfindungsgemäße Installationskanäle spezifikationsgerecht präzise und wirtschaftlich zu montieren.

In einer weiteren Ausführung der erfindungsgemäßen Installationskanäle verläuft die Skalierung und/oder die Höhenrißmarkierung parallel zur Längsachse des Kanalprofiles und/ oder des Deckels.

Hierdurch kann vorteilhafterweise erreicht werden, daß sowohl das Kanalprofil als auch der dieses verschießende Deckel separat ohne zusätzliche Meßmittel auf die entsprechende Dimension abgelängt werden kann und, daß das Kanalprofil exakt auf der breits an der Wand bzw. Decke angezeichneten Höhenlinie angelegt und nachfolgend befestigt werden kann.

Die Erfindung lehrt weiterhin, daß die Höhenrißmarkierung auch außerhalb der Mittelachse des Kanalprofils und/oder des Deckels verlaufen kann. Dies kann erforderlich sein bei größerdimensionierten Installationskanälen, bei denen die Befestigungsöffnungen nicht in der Mittelachse des Kanalprofils sondern versetzt zu dieser Mittelachse verlaufen. In diesem Fall lehrt die Erfindung auch, daß eine oder mehrere Höhenrißmarkierungen so aufgebracht sind, daß sie durch das Zentrum der gedachten Linie der Befestigungsöffnungen verlaufen und, daß der Monteur mit einer ebenfalls im Inneren des Kanalprofils aufgebrachten Skalierung die entsprechenden Punkte für die Befestigung des Kanalprofils an der Wand oder Decke exakt vorgeben kann.

In einer weiteren Ausgestaltung der erfindungsgemäßen Installationskanäle weist die Skalierung auf dem Kanalprofil und/oder dem Deckel eine metrische Einteilung auf.
Durch die symmetrische Einteilung ist die Verwendung eines zusätzlichen Meßmittels wie beispielsweise eines Zollstockes oder eines Bandmaßes überflüssig. Besonders vorteilhaft wirkt sich eine derartige metrische Skalierung auf dem Kanalprofil und/oder dem Deckel aus, wenn die zu befestigenden Teilstücke der Installationskanäle Längen von mehr als 2 m aufweisen, so daß hier mit einem Bandmaß gearbeitet werden muß, welches für eine exakte Bemessung der abzulängenden Installationskanäle einen zusätzlichen Installateur benötigt, was wiederum die Kosten für eine derartige Montage in die Höhe treibt.

In einer weiteren vorteilhaften Weiterbildung der erfindungsgemäßen Installationskanäle weist die Skalierung auf dem Kanalprofil und/oder dem Deckel eine nicht metrische Einteilung auf, was erforderlich ist, wenn derartige Kanäle in Ländern montiert werden müssen, die in anderen Maßeinheiten wie beispielsweise Inch, Yard oder ähnlichem denken und arbeiten.

Die Erfindung lehrt weiterhin, daß die Höhenrißmarkierung identisch mit der Mittelachse des Kanalprofils und/oder des Deckels ist, was vorteilhafterweise ein symmetrisches Befestigen der Installationskanäle an einer bereits angezeichneten Höhenlinie ermöglicht.

In einer besonders vorteilhaften Ausführungsform der erfindungsgemäßen Installationskanäle ist die Skalierung auf dem Kanalprofil und/oder dem Deckel an den Rändern gegenüberliegend aufgebracht, was vorteilhafter Weise ein winkliges Ablängen des Kanalprofils und/oder des Deckels ermöglicht.

Die Erfindung lehrt jedoch auch weiterhin, daß die Skalierung an den Randbereichen des Kanalprofils und/oder des Deckels versetzt zueinander aufgebracht ist, so daß bei einer Änderung der Verlegerichtung um einen bestimmten Winkel beispielsweise 90° die erfindungsgemäßen Installationskanäle auf die erforderliche Gehrung in dem geforderten Winkel abgelängt werden können.

Bevorzugt wird auf den erfindungsgemäßen Installationskanälen die Skalierung und/oder die Höhenrißmarkierung in der jeweils erforderlichen oder gewünschten Dimensionierung aufgedruckt.
In weiteren Ausführungsformen kann die Skalierung und/oder die Höhenrißmarkierung auch aufgeklebt bzw. eingeprägt sein, wobei andere Kennzeichnungsverfahren aus dem bekannten Stand der Technik nicht weiter benannt werden sollen.

Vorteilhaft wird bei diesen Aufbringungsverfahren gesehen, daß diese im Rahmen der Herstellung der Installationskanäle integrierbar sind und somit keinen zusätzlichen zeitlichen und somit finanziellen Aufwand darstellen.

Die Erfindung wird im folgenden an bevorzugten Ausführungsbeispielen erläutert. Es zeigen:
- Figur 1:: eine Schnittdarstellung durch einen herkömmlichen Installationskanal,
- Figur 2:: eine Ansicht der Unterseite eines erfindungsgemäßen Installationskanals,
- Figur 3:: eine Draufsicht auf ein Kanalprofil des erfindungsgemäßen Installationskanals,
- Figur 4:: eine Ansicht des Deckels des erfindungsgemäßen Installationskanals.

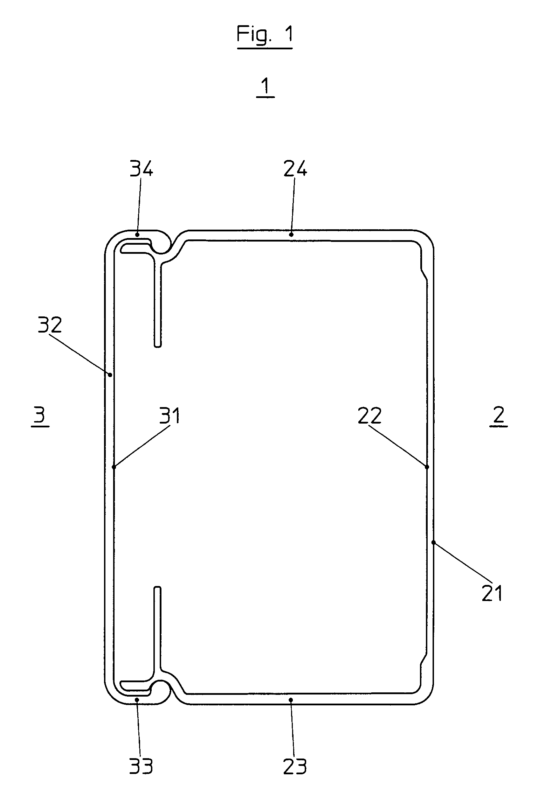

In Figur 1 wird der Querschnitt eines Ausführungsbeispiels eines Installationskanals 1 dargestellt. Der Installationskanal 1 besteht im allgemeinen aus einem wenigstens zu einer Seite offenen Kanalprofil 2 und einen dieses verschließenden Deckel 3.
Das Kanalprofil 2 besteht aus einem Boden 21 und diesem Ausführungsbeispiel an den rechtwinklig daran befindlichen Seitenwänden 23, 24. Der Deckel 3 weist eine Außenseite 32 und eine Innenfläche 31 auf, wobei der Deckel 3 mit seinen Randbereichen 33, 34 das an einer Seite offene Kanalprofil 2 umgreift und somit verschließt.

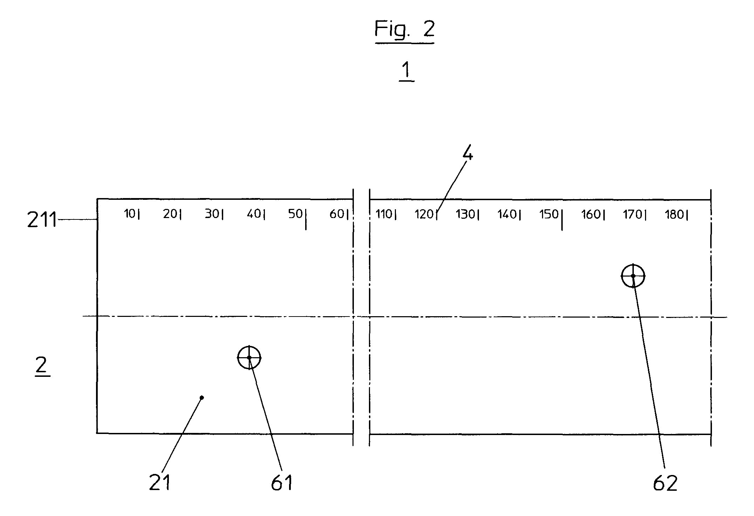

In Figur 2 ist eine Ansicht des erfindungsgemäßen Installationskanals 1 dargestellt, wobei hier der Boden 21 des Kanalprofils 2 sichtbar ist. In den Boden 21 des Kanalprofils 2 des Installationskanals 1 sind Öffnungen 61, 62 eingebracht, welche der Durchführung von Befestigungsmitteln zur Montage des erfindungsgemäßen Installationskanals 1 dienen.
Im Bereich der oberen Kante 211 des Boden 21 des Kanalprofils 2 ist eine Skalierung 4 aufgebracht, welche eine metrische Einteilung aufweist und die mit 0 beginnend vom äußeren Rand des Bodens 21 des Kanalprofiles 2 aufgebracht ist. Durch diese metrische Skalierung ist ein Ablängen des erfindungsgemäßen Installationskanals 1 problemlos möglich, wobei zusätzlich noch der Abstand der Öffnungen 61, 62, welche in diesem Ausführungsbeispiel versetzt zur Mittelline des Kanalprofils 2 eingebracht sind, ablesbar sind. Auf der nicht sichtbaren Innenseite 22 des Boden 21 des Kanalprofils 2 sind Höhenrißmarkierungen 5 eingebracht, welche parallel zur Längsachse des Kanalprofils 2 verlaufen und durch die Mittelpunkte der jeweiligen Öffnungen 61, 62 längsverlaufend aufgebracht sind.

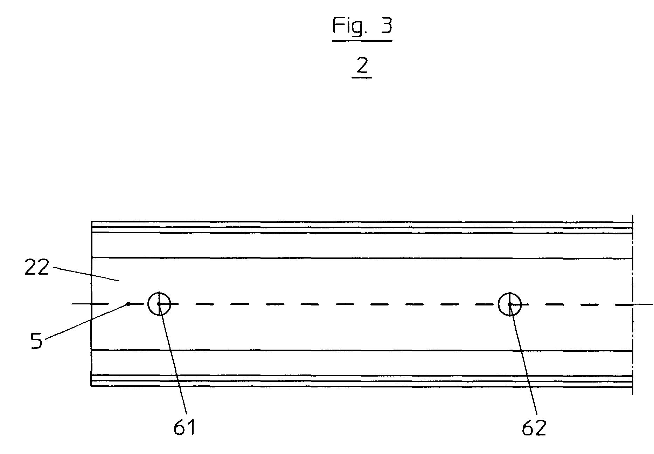

In Figur 3 ist der Installationskanal 2 so dargestellt, daß die Innenseite 22 des Boden 21 sichtbar ist.
Auf der Innenseite 22 des Bodens 21 des Kanalprofils 2 ist eine Höhenrißmarkierung 5 dargestellt, welche parallel zur Längsachse des Kanalprofiles 2 verläuft und die in diesem Ausführungsbeispiel mit der Mittelachse des Kanalprofils 2 ident ist. Diese erweist sich als vorteilhaft, da die Öffnungen 61, 62 für das Einbringen der Befestigungsmittel des Installationskanals 1 in der gleichen Achse liegen und somit eine bereits angezeichnete Höhenlinie an der Wand oder der Decke mit der Höhenrißlinie 5 in Einklang gebracht werden kann und die Punkte für die Befestigungen durch die Öffnungen 61, 62 kennzeichenbar sind.

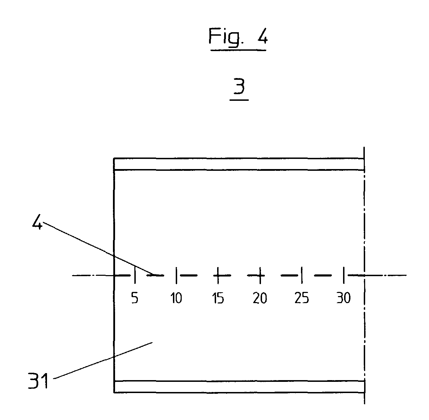

In Figur 4 ist die Ansicht des Deckels 3 des erfindungsgemäßen Installationskanals 1 dargestellt.
In diesem Ausführungsbeispiel ist auf der Innenseite 31 des Deckels 3 eine Skalierung 4 aufgebracht, welche parallel zur Längsachse des Deckels 3 verläuft und eine nicht metrische Einteilung aufweist. Bei diesem Ausführungsbeispiel ist die Skalierung 4 genau auf der Mittelachse des Deckels 3 aufgebracht.

## Patentansprüche

1. Installationskanal, insbesondere Wandkanal mit einem zu einer Seite offenen Kanalprofil zur Aufnahme von elektrischen Installationseinrichtungen, Kabeln, Fluid-Leitungen und dergleichen und/oder einem Deckel
**dadurch gekennzeichnet,**
**daß** auf wenigstens einer Seite (21, 22, 23, 24) des Kanalprofils (2) und/oder wenigstens einer Seite (31, 32) des Deckels (3) längsverlaufend wenigstens eine Skalierung (4) und/oder eine Höhenrißmarkierung (5) aufgebracht ist.

2. Installationskanal nach Anspruch 1, **dadurch gekennzeichnet, daß** die Skalierung (4) und/oder die Höhenrißmarkierung (5) parallel zur Längsachse des Kanalprofils (2) und/ oder des Deckels (3) verläuft.

3. Installationskanal nach einem der vorhergehenden Ansprüche, **dadurch gekennzeichnet, daß** die Skalierung (4) eine metrische Einteilung aufweist.

4. Installationskanal nach einem der vorhergehenden Ansprüche, **dadurch gekennzeichnet, daß** die Skalierung (4) eine nicht metrische Einteilung aufweist.

5. Installationskanal nach einem der vorhergehenden Ansprüche, **dadurch gekennzeichnet, daß** die Höhenrißmarkierung (5) auf der Mittelachse des Kanalprofils (2) und/oder des Deckels (3) aufgebracht ist.

6. Installationskanal nach einem der vorhergehenden Ansprüche, **dadurch gekennzeichnet, daß** die Skalierung (4) und/oder die Höhenrißmarkierung (5) auf das Kanalprofil (2) und/oder den Deckel (3) aufgedruckt ist.

7. Installationskanal nach einem der vorhergehenden Ansprüche, **dadurch gekennzeichnet, daß** die Skalierung (4) und/oder die Höhenrißmarkierung (5) auf das Kanalprofil (2) und/oder den Deckel (3) aufgeklebt ist.

8. Installationskanal nach einem der vorhergehenden Ansprüche, **dadurch gekennzeichnet, daß** die Skalierung (4) und/oder die Höhenrißmarkierung (5) auf das Kanalprofil (2) und/oder den Deckel (3) eingeprägt ist.
